# EUROPEAN PATENT APPLICATION

(11) **EP 4 656 528 A1**
(43) Date of publication of application: **03.12.2025**
(21) Application number: 25756811.3
(22) Date of filing: 31.03.2025

(54) **VERTICAL TAKE-OFF AND LANDING AIRCRAFT, METHOD FOR MANEUVERING SAME, AND DEVICE FOR CONTROLLING SAME**

(30) Priority: 16.04.2024 KR 20240051000; 02.01.2025 KR 20250000415
(71) Applicant: MetroAir Inc., Goyang-si, Gyeonggi-do 32260 (KR)
(72) Inventor: KIM, Hak Yoon, Hongseong-gun Chungcheongnam-do 32260 (KR)
(74) Representative: Vossius & Partner Patentanwälte Rechtsanwälte mbB
(86) International application number: PCT/KR2025/004134
(87) International publication number: WO 2025/220915

(57) **Abstract**

Disclosed herein are a vertical take-off and landing aircraft, a maneuvering method of the same, and a control apparatus for the same. The vertical take-off and landing aircraft includes: a fuselage; a lift unit including a first propeller disposed at a periphery of the fuselage to provide lift to the fuselage and a duct protecting the first propeller; and a thrust unit including a second propeller disposed at a rear end of the fuselage to provide thrust to the fuselage. Here, the duct includes: a propeller guard portion; a leading airfoil portion; a trailing airfoil portion; and a flow guide portion. The propeller guard portion is convexly formed toward the first propeller to have a central diameter smaller than a diameter of an inlet for air to flow in therethrough and a diameter of an outlet for air to flow out therethrough. The leading airfoil portion is disposed in a front region of the duct colliding with air during forward flight and has a shape corresponding to a shape of a front portion of an airfoil including a leading edge. The trailing airfoil portion is disposed in a rear region of the duct designed to allow air to flow thereover during forward flight and has a shape corresponding to a shape of a rear portion of the airfoil including a trailing edge. The flow guide portion protrudes from the propeller guard portion toward the first propeller and suppresses vortex generation at a tip of the first propeller upon rotation of the first propeller. The vertical take-off and landing aircraft according to the present invention can achieve high performance in terms of high-speed flight and stable flight while having excellent maneuverability and efficiency.

## Description

### [Technical Field]

The present invention relates to a vertical take-off and landing aircraft, a maneuvering method of the same, and a control apparatus for the same and, more particularly, to a vertical take-off and landing aircraft that can achieve high performance in terms of high-speed flight and stable flight while having excellent maneuverability, a maneuvering method of the same, and a control apparatus for the same.

### [Background Art]

Unmanned aerial vehicles, such as drones, are aircraft controlled via wireless devices such as remote controllers without an onboard pilot, and are being widely used in civilian and military applications.

Recently, as unmanned and manned aircraft have been evolving into a mutually integrated operational model, assisting each other's functions, rather than being completely separated, use of unmanned aircraft is rapidly increasing across civilian, military, and industrial sectors such as transport, security, search, and sports.

Generally, aerial vehicles are broadly categorized into those that take off using lift generated by fixed wings during movement thereof, and those that take off and land vertically using rotors and propellers without a runway. Vertical take-off and landing (VTOL) aircraft are the subject of much research because they can take off and land vertically in a rapid manner even in confined locations without a runway, allowing them to perform a wide variety of flight missions compared to aircraft that require a runway for take-off.

One type of vertical take-off and landing (VTOL) aircraft is a so-called "multicopter" utilizing a plurality of rotors and propellers.

However, despite having the advantage of being able to hover, such a multicopter type VTOL aircraft suffers from reduction in efficiency during forward flight. In particular, this problem becomes even more pronounced when the load of the aircraft is increased due to transportation of cargo or passengers.

As an alternative, a tilting mechanism is often applied to rotors and propellers for lift. However, this approach requires a change in the control mode every time the aircraft takes off, lands, or flies forward, leading to significant structural and control complexity.

Another type of VTOL aircraft uses a ducted propeller for lift and a separate propeller for thrust.

In addition to a basic function of protecting a propeller, a duct can also increase efficiency of the propeller. That is, given that lift generated by the propeller comes from a pressure differential caused by a speed differential between air flowing over an upper surface of the propeller and air flowing over a lower surface of the propeller, the aircraft can lose lift due to a vortex generated in a tip region of the propeller, although the propeller has the highest rotational speed at the tip, which is a free end thereof. The duct can prevent vortex generation at the tip of the propeller and can reduce noise by shielding the tip of the propeller, which collides most forcefully with the air, from the air.

However, despite these benefits, the duct acts as a structure that causes significant air resistance during high-speed flight of the aircraft, resulting in degradation in flight performance.

The related art is disclosed in Korean Patent Laid-open Publication No. 2021-0115883 (published on September 27, 2021), titled "Vertical Take-off and Landing Aircraft".

### [Disclosure]

### [Technical Problem]

Embodiments of the present invention are conceived to solve such problems in the art and provide a vertical take-off and landing aircraft that has excellent maneuverability and efficiency along with high-speed and stable flight performance, a maneuvering method of the same, and a control apparatus for the same.

It should be understood that objects of the present invention are not limited to those described above. The above and other objects of the present invention will become apparent to those skilled in the art from the detailed description of the following embodiments in conjunction with the accompanying drawings.

### [Technical Solution]

In accordance with one aspect of the present invention, a vertical take-off and landing aircraft includes: a fuselage extending lengthwise in a front-to-rear direction; a lift unit including a first propeller disposed at a periphery of the fuselage to provide lift to the fuselage and a duct protecting the first propeller; and a thrust unit including a second propeller disposed at a rear end of the fuselage to provide thrust to the fuselage, wherein the duct includes: a propeller guard portion convexly formed toward the first propeller to have a central diameter smaller than a diameter of an inlet for air to flow in therethrough and a diameter of an outlet for air to flow out therethrough; a leading airfoil portion disposed in a front region of the duct colliding with air during forward flight, the leading airfoil portion having a shape corresponding to a shape of a front portion of an airfoil including a leading edge; a trailing airfoil portion disposed in a rear region of the duct allowing air to flow thereover during forward flight, the trailing airfoil portion having a shape corresponding to a shape of a rear portion of the airfoil including a trailing edge; and a flow guide portion protruding from the propeller guard portion toward the first propeller and suppressing vortex generation at a tip of the first propeller upon rotation of the first propeller.

The flow guide portion may cover an upper side of the tip and may define a compressed air flow path between the flow guide portion and the tip to limit a maximum rise height of the tip upon rotation of the first propeller.

The flow guide portion may include: a horizontal guide surface extending horizontally toward a rotation axis of the first propeller while being spaced apart from the upper side of the tip to define the compressed air flow path; and a sloped guide surface extending tangentially from an inner end of the horizontal guide surface toward the inlet of the propeller guard portion.

The lift unit may include a plurality of lift units symmetrically arranged with respect to the fuselage in the front-to-rear direction and in a side-to-side direction, wherein rotation axes of a plurality of first propellers constituting the plurality of lift units may be arranged at equidistant intervals on a circumference of an imaginary circle having a constant radius about a center of gravity of the fuselage.

The plurality of lift units may be arranged in one horizontal plane intersecting a longitudinal axis of the fuselage.

The vertical take-off and landing aircraft may further include: a fixed wing connecting the fuselage to the lift unit.

In accordance with another aspect of the present invention, a maneuvering method of the vertical take-off and landing aircraft set forth above includes: a vertical flight phase in which an altitude of the fuselage is raised or lowered by collectively changing rotational speeds of the plurality of first propellers; a hovering flight phase in which the fuselage performs hovering flight by keeping the rotational speeds of the plurality of first propellers constant; a position change phase in which a position of the fuselage is changed by selectively changing the rotational speeds of the plurality of first propellers; and a forward flight phase in which the fuselage performs forward flight by rotating the second propeller, wherein the forward flight phase includes: an accelerated forward flight phase in which the fuselage performs accelerated forward flight at a constant altitude by increasing a rotational speed of the second propeller, and the accelerated forward flight phase has a first lift control mode in which the rotational speeds of the plurality of first propellers are collectively decreased while increasing the rotational speed of the second propeller to mitigate increase in lift due to increase in forward flight speed of the fuselage.

The forward flight phase may further include: a decelerated forward flight phase in which the fuselage performs decelerated forward flight at a constant altitude by decreasing the rotational speed of the second propeller, wherein the decelerated forward flight phase may have a second lift control mode in which the rotational speeds of the plurality of first propellers are collectively increased while decreasing the rotational speed of the second propeller to compensate for reduction in lift due to decrease in forward flight speed of the fuselage.

The forward flight phase may further include: a constant-speed forward flight phase in which the fuselage performs constant-speed forward flight at a constant altitude by keeping the rotational speed of the second propeller constant, wherein the constant-speed forward flight phase may have a third lift control mode in which the plurality of first propellers is rotated at a predetermined reference rotational speed.

The reference rotational speed may be set within the range of 1% to 20% of a rotational speed of the first propeller required for the hovering flight phase.

In accordance with a further aspect of the present invention, a control apparatus for the vertical take-off and landing aircraft set forth above includes: a vertical control unit configured to collectively control rotational speeds of the plurality of first propellers; a position change control unit configured to selectively control the rotational speeds of the plurality of first propellers; and a forward control unit configured to control a rotational speed of the second propeller, wherein the forward control unit has a first lift control mode in which an operation performed by the vertical control unit to decelerate the plurality of first propellers is linked to an operation of accelerating the second propeller to cause the fuselage to perform accelerated forward flight at a constant altitude.

The forward control unit may have a second lift control mode in which an operation performed by the vertical control unit to accelerate the plurality of first propellers is linked to an operation of decelerating the second propeller to cause the fuselage to perform decelerated forward flight at a constant altitude.

The forward control unit may have a third lift control mode in which an operation performed by the vertical control unit to keep the rotational speeds of the plurality of first propellers constant is linked to an operation of keeping the rotational speed of the second propeller constant to cause the fuselage to perform constant-speed forward flight at a constant altitude.

### [Advantageous Effects]

With a duct including a propeller guard portion, a leading airfoil portion, a trailing airfoil portion, and a flow guide portion, a vertical take-off and landing aircraft according to the present invention can implement both the flight characteristics of a multi-copter type vertical take-off and landing (VTOL) aircraft and the flight characteristics of a fixed-wing aircraft, thereby providing high-speed and stable flight performance as well as excellent maneuverability and efficiency.

It should be understood that advantageous effects of the present invention are not limited to those described above and include any advantageous effects conceivable from the features disclosed in the detailed description of the present invention or the appended claims.

### [Description of Drawings]

FIG. 1 is an overall view of a vertical take-off and landing aircraft according to one embodiment of the present invention.
FIG. 2 is a plan view of FIG. 1.
FIG. 3 is a side view of FIG. 1.
FIG. 4 is an overall view of a lift unit of FIG. 1.
FIG. 5 is a cross-sectional view taken along line A-A of FIG. 4.
FIG. 6 is an exemplary view illustrating maneuvering of a vertical take-off and landing aircraft according to one embodiment of the present invention.
FIG. 7 is an exemplary view of a control apparatus for a vertical take-off and landing aircraft according to one embodiment of the present invention.
FIG. 8 is an exemplary view illustrating operation of the control apparatus of FIG. 7.

### [Mode for Invention]

Hereinafter, exemplary embodiments of the present invention will be described with reference to the accompanying drawings. It should be understood that the present invention may be embodied in different ways and is not limited to the following embodiments. In the drawings, portions irrelevant to the description will be omitted for clarity. Like components will be denoted by like reference numerals throughout the specification.

Throughout the specification, when an element or layer is referred to as being "on," "connected to," or "coupled to" another element or layer, it may be directly on, connected to, or coupled to the other element or layer or intervening elements or layers may be present. In addition, unless stated otherwise, the term "includes" should be interpreted as not excluding the presence of other components than those listed herein.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof.

Hereinafter, embodiments of the present invention will be described with reference to the accompanying drawings.

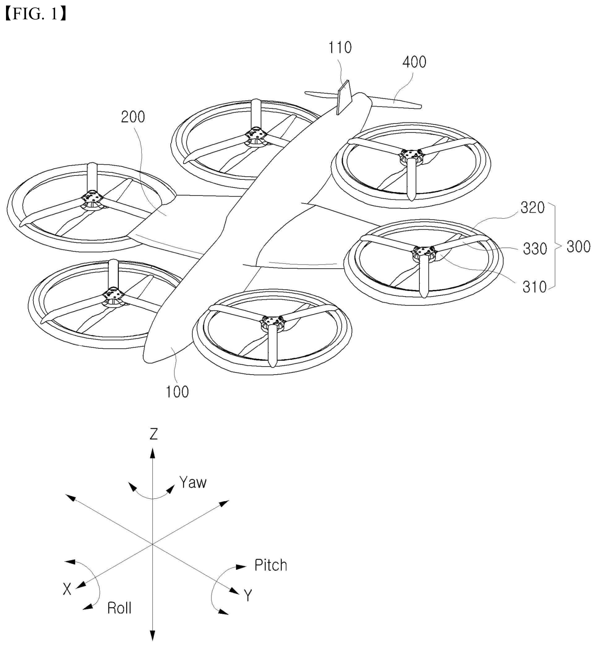

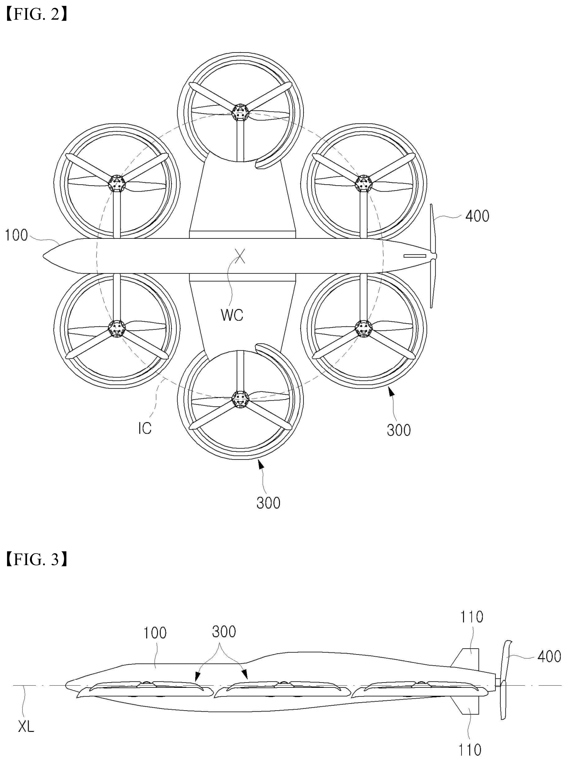

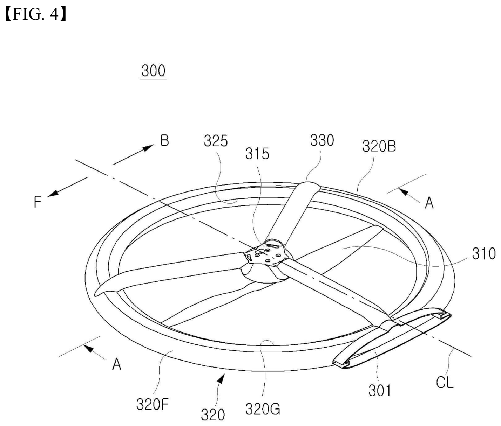

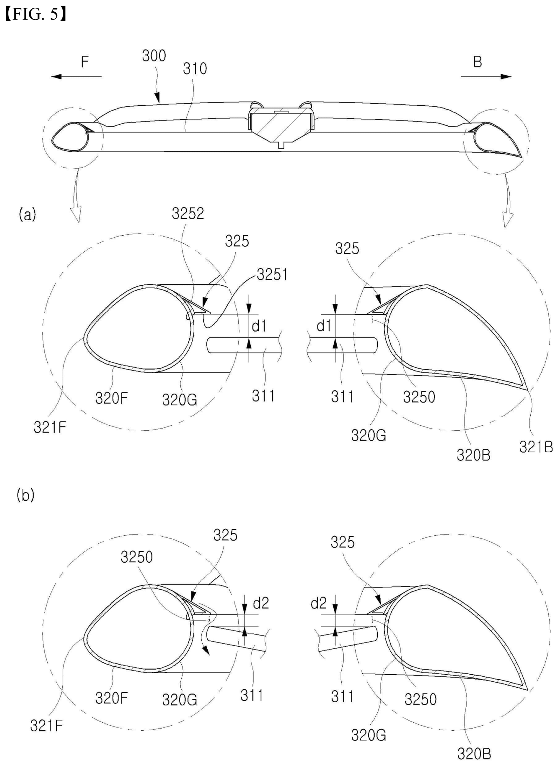

FIG. 1 is an overall view of a vertical take-off and landing aircraft according to one embodiment of the present invention, FIG. 2 is a plan view of FIG. 1, FIG. 3 is a side view of FIG. 1, FIG. 4 is an overall view of a lift unit of FIG. 1, and FIG. 5 is a cross-sectional view taken along line A-A of FIG. 4.

Referring to FIGS. 1 to 5, the vertical take-off and landing aircraft according to one embodiment of the present invention includes a fuselage 100, a lift unit 300, and a thrust unit 400.

The fuselage 100 may extend lengthwise in a front-to-rear direction, which corresponds to a longitudinal axis of the aircraft, and may be formed in a streamlined shape similar to that of a fixed-wing aircraft to reduce air resistance.

The lift unit 300 generates lift for the fuselage 100 and may include a first propeller 310 and a duct 320.

The first propeller 310 may be disposed at a periphery of the fuselage 100 and may provide lift to the fuselage 100 upon rotation thereof.

The duct 320 is formed in an annular shape to surround the first propeller 310 and may protect the first propeller 310 from an outside environment.

The duct 320 may include a propeller guard portion 320G, a leading airfoil portion 320F, a trailing airfoil portion 320B, and a flow guide portion 325.

The propeller guard portion 320G corresponds to an inner surface of the duct 320 facing the first propeller 310.

A central portion of the propeller guard portion 320G in a vertical direction, which is a flow direction of air, may be formed convexly toward the first propeller 310.

That is, the propeller guard portion 320G includes an upper inlet for air to flow in therethrough upon rotation of the first propeller 310 and a lower outlet for air to flow out therethrough upon rotation of the first propeller 310, wherein the central portion of the propeller guard portion 320G in the flow direction of air has a smaller diameter than the upper inlet and the lower outlet. The convexly formed central portion of the propeller guard portion 320G may be spaced apart by a predetermined distance from a tip 311 of the first propeller 310, which is a free end of the first propeller 310.

In this way, the propeller guard portion 320G can basically straighten an irregular airflow above the first propeller 310 and can guide an airflow coming in from above the first propeller 310 due to a suction action upon rotation of the first propeller 310, thereby generating a strong downward airflow. This strong downward airflow can increase lift generated by the first propeller 310.

The leading airfoil portion 320F may be disposed in a front region F of the duct 320 that collides with air during forward flight.

That is, the leading airfoil portion 320F may be disposed in the front region F of the duct 320, which forms a semi-circular shape with respect to a reference line CL intersecting a rotation axis of the first propeller 310 in a side-to-side direction.

In other words, in the front region F of the duct 320 that forms a semi-circular shape with respect to the reference line CL, an outer surface of the duct forms the leading airfoil portion 320F and an inner surface of the duct forms the propeller guard portion 320G.

The leading airfoil portion 320F has a shape corresponding to a shape of a front portion of an airfoil including a foremost leading edge 321F that collides with air during forward flight, and may accelerate the flow of air during forward flight, thereby allowing a relatively high pressure to be applied to a lower region of the duct 320, which corresponds to a lower surface of the airfoil.

The trailing airfoil portion 320B may be disposed in a rear region B of the duct 320 that allows air to flow thereover during forward flight.

That is, the trailing airfoil 320B may be disposed in the rear region B of the duct 320, which forms a semi-circular shape with respect to the reference line CL intersecting the rotation axis of the first propeller 310 in the side-to-side direction.

In other words, in the rear region B of the duct 320 that forms a semi-circular shape with respect to the reference line CL, an outer surface of the duct forms the trailing airfoil portion 320B and an inner surface of the duct forms the propeller guard portion 320G.

The trailing airfoil portion 320B has a shape corresponding to a shape of a rear portion of the airfoil including a rearmost trailing edge 321B that allows air to flow thereover during forward flight, and may induce a rearward flow of air during forward flight, thereby reducing a pressure in the rear region of the duct 320.

The leading airfoil portion 320F and the trailing airfoil 320B may generate lift for the fuselage 100 during forward flight, like a fixed wing.

The shapes of the propeller guard portion 320G, the leading airfoil portion 320F, and the trailing airfoil 320B described above may be appropriately modified depending on the purpose of use of the aircraft. That is, the shapes of the propeller guard portion 320G, the leading airfoil portion 320F, and the trailing airfoil 320B may be appropriately redesigned according to whether the main purpose of the aircraft is high-speed flight, such as for military and sports applications, or stable flight, such as for logistics and transportation applications.

As the duct 320 according to the present invention includes the leading airfoil portion 320F and the trailing airfoil portion 320B along with the propeller guard portion 320G, the aircraft according to the present invention can achieve high performance in terms of high-speed flight and stable flight, which cannot not be achieved by typical multicopter-type vertical take-off and landing aircraft, while enabling excellent maneuverability and efficient flight.

The flow guide portion 325 may be provided to the propeller guard portion 320G and may be formed at a location adjacent to the inlet of the propeller guard portion 320G to protrude toward the first propeller 310. The flow guide portion 325 can suppress vortex generation at the tip 311 of the first propeller 310 upon rotation of the first propeller 310. As a result, lift generated by the first propeller 310 can be increased while lift generated by the airfoil-shaped duct 320 during forward flight can also be increased.

The flow guide portion 325 covers an upper side of the tip 311 of the first propeller 310 such that a compressed air flow path 3250 can be formed between the flow guide portion 325 and the tip 311 upon rotation of the first propeller 310. The compressed air flow path 3250 can prevent the tip 311 from contacting the flow guide portion 325 when the tip 311 bends upwards upon rotation of the first propeller 310. Consequently, the compressed air flow path 3250 can limit a maximum rise height of the tip 311 bending upwards, while acting as an air bearing.

The flow guide portion 325 may include a horizontal guide surface 3251 and a sloped guide surface 3252.

The horizontal guide surface 3251 may extend horizontally from the propeller guard portion 320G toward the rotation axis of the first propeller 310 while being spaced apart by a predetermined distance from the upper side of the tip 311.

The sloped guide surface 3252 may extend tangentially from an inner end of the horizontal guide surface 3251 toward the inlet of the propeller guard portion 320G.

Here, while the first propeller 310 is stationary, a first distance d1 may be maintained between the horizontal guide surface 3251 and the tip 311 and, while the first propeller 310 is rotated, a second distance d2 may be maintained between the horizontal guide surface 3251 and the tip 311. Here, the second distance d2 may correspond to the maximum rise height of the tip 311. When the first propeller 310 is rotated, the rotational speed of the first propeller 310 is highest at the tip 311, which is the free end of the first propeller 310. As the rotational speed of the first propeller 310 increases, the tip 311 approaches the horizontal guide surface 3251 while maintaining the second distance d2 from the horizontal guide surface.

Then, air flowing in through the inlet of the propeller guard portion 320G can be further compressed as the air passes through the compressed air flow path 3250 between the horizontal guide surface 3251 and the tip 311 while quickly flowing over the sloped guide surface 3252. Subsequently, the air can quickly flow out through the outlet of the propeller guard portion 320G after passing through the first propeller 310.

The tip 311 of the first propeller 310 can be prevented from bending farther in an upward direction due to the compressed air passing through the compressed air flow path 3250. Here, a downward pressing force is applied to the upper surface of the tip 311. The pressing force can be converted into additional lift of the first propeller 310 while suppressing vortex generation at the tip 311 of the first propeller 310.

In addition, as the flow guide portion 325 has the sloped guide surface 3252 extending tangentially from the rear end of the leading airfoil portion 320F, the flow guide portion 325 can suppress vortex generation at the inlet of the propeller guard portion 320G during forward flight and can cause a vortex to dissipate in a lower region of the duct 320 beyond the compressed air flow path 3250, which corresponds to the lower surface of the airfoil, thereby further increasing lift generated by the duct 320 during forward flight.

The duct 320 may further include a propeller support portion 330.

The propeller support portion 330 may securely support the first propeller 310 and a drive unit 315 rotating the first propeller 310, such as a rotor. To this end, one end of the propeller support portion 330 may be coupled to the duct 320, the other end of the propeller support portion 330 may extend towards the rotation axis of the first propeller 310, and the propeller support portion 330 may be disposed radially about the rotation axis of the first propeller 310.

In addition, the duct 320 may further include a connection portion 301.

The connection portion 301 may be disposed at one side of the duct 320. The duct 320 may be directly coupled to the fuselage 100 through the connection portion 301. Alternatively, the duct 320 may be coupled to a fixed wing 200 provided to the fuselage 100 through the connection portion 301.

The lift unit 300 may include a plurality of lift units 300 symmetrically arranged with respect to the fuselage 100 in the front-to-rear direction and the side-to-side direction. The illustrated embodiment shows six lift units 300, such that the aircraft can be a so-called hexacopter. However, it should be understood that the present invention is not limited thereto and the lift unit 300 may include various numbers of lift units such that the aircraft can be a bicopter, a quadcopter, or an octocopter.

Here, as shown in FIG. 2, rotation axes of a plurality of first propellers 310 constituting the plurality of lift units 300 may be arranged at equidistant intervals on a circumference of an imaginary circle IC having a predetermined radius about the center of gravity WC of the fuselage 100.

In addition, as shown in FIG. 3, the plurality of lift units 300 may be arranged in one horizontal plane intersecting the longitudinal axis XL of the fuselage 100. As a result, the streamlined fuselage 100, an airfoil-shaped fixed wing 200, and the lift unit 300 may all be arranged on one horizontal plane intersecting the longitudinal axis XL of the fuselage 100.

In addition, the aircraft may further include a fixed wing 200.

The fixed wing 200 has an airfoil shape and may be disposed to connect the fuselage 100 to the duct 320 of the lift unit 300.

For example, when the aircraft is a hexacopter aircraft including six lift units 300, two front lift units 300 may be directly coupled to front left and right sides of the fuselage 100, respectively, and two rear lift units 300 may be directly coupled to rear left and right sides of the fuselage 100, respectively. In addition, two central lift units 300 may be coupled to central left and right sides of the fuselage 100, respectively, through the fixed wing 200.

The aircraft may further include a vertical tail wing 110 at a rear portion of the fuselage 100.

The vertical tail wing 110 may further increase position stability of the fuselage 100 during flight.

The thrust unit 400 generates thrust for the fuselage 100 and may include a second propeller.

The second propeller may be disposed at a rear end of the fuselage 100 and may provide forward thrust to the fuselage 100.

Next, a maneuvering method of a vertical take-off and landing aircraft according to the present invention will be described.

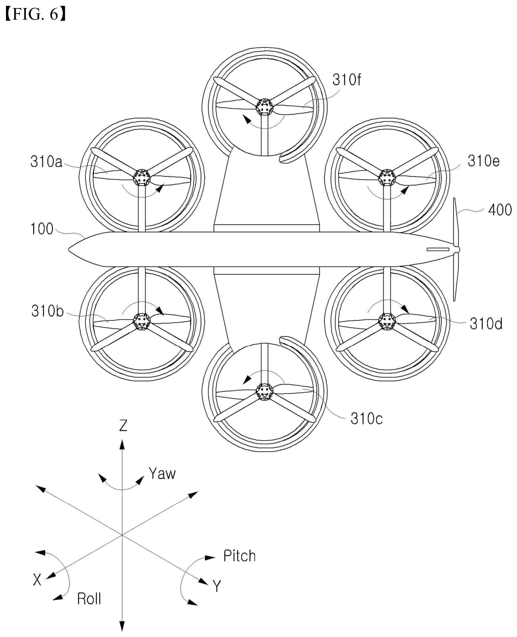

FIG. 6 is an exemplary view illustrating maneuvering of a vertical take-off and landing aircraft according to one embodiment of the present invention.

The maneuvering method of a vertical take-off and landing aircraft according to the present invention may be implemented by the vertical take-off and landing aircraft described above.

The maneuvering method of a vertical take-off and landing aircraft according to the present invention may include: a vertical flight phase, a hovering flight phase, a position change phase, and a forward flight phase.

The vertical flight phase may be a take-off and landing phase and is a phase in which an altitude of the fuselage 100 is raised or lowered by collectively changing rotational speeds of the plurality of first propellers 310.

That is, in the vertical flight phase, the altitude of the fuselage 100 may be raised by increasing the rotational speeds of all the plurality of first propellers 310, or the altitude of the fuselage 100 may be lowered by decreasing the rotational speeds of all the plurality of first propellers 310.

The hovering flight phase may be a hovering phase and is a phase in which the fuselage 100 performs hovering flight by keeping the rotational speeds of the plurality of first propellers 310 constant.

The position change phase is a phase in which a position of the fuselage 100 is changed by selectively changing the rotational speeds of the plurality of first propellers 310.

That is, in the position change phase, a position of the fuselage 100 in a roll direction may be changed by rotating the left first propellers 310b, 310c, 310d and the right first propellers 310a, 310f, 310e at different speeds. In addition, a position of the fuselage 100 in a pitch direction may be changed by rotating the front first propellers 310a, 310b and the rear first propellers 310d, 310e at different speeds. In addition, a position of the fuselage 100 in a yaw direction may be changed by rotating the clockwise-rotating first propellers 310b, 310d, 310f and the counterclockwise-rotating first propellers 310a, 310c, 310e at different speeds.

The forward flight phase is a phase in which the fuselage 100 performs forward flight by rotating the second propeller.

It should be understood that two or more of the vertical flight phase, the position change phase, and the forward flight phase may be conducted simultaneously.

That is, when the rotational speeds of the plurality of first propellers 310 are increased or decreased differently from each other during vertical flight, the fuselage 100 can change the position thereof in the roll direction, the pitch direction, or the yaw direction while flying vertically.

In addition, when the second propeller is rotated during vertical flight, the fuselage 100 can perform forward flight while flying vertically.

In addition, when the rotational speeds of the plurality of first propellers 310 are increased or decreased differently from each other during forward flight, the fuselage 100 can change the position thereof in the roll direction, the pitch direction, or the yaw direction while flying forward.

Here, with the thrust unit 400 and the lift unit 300 including the airfoil-shaped duct 320, the vertical take-off and landing aircraft according to the present invention has a wide range of maneuverability and excellent efficiency, along with high-speed and stable flight performance comparable to fixed-wing aircraft, in addition to the basic maneuvering performance of vertical take-off and landing aircraft as described above.

The forward flight phase may include an accelerated forward flight phase, a constant-speed forward flight phase, and a decelerated forward flight phase.

The accelerated forward flight phase may be a phase in which the fuselage 100 performs accelerated forward flight at a constant altitude by increasing the rotational speed of the second propeller.

The constant-speed forward flight phase may be a phase in which the fuselage 100 performs constant-speed forward flight at a constant altitude by keeping the rotational speed of the second propeller constant.

The decelerated forward flight phase may be a phase in which the fuselage 100 performs decelerated forward flight at a constant altitude by decreasing the rotational speed of the second propeller.

Here, the accelerated forward flight phase may have a first lift control mode in which the rotational speeds of the plurality of first propellers 310 are collectively decreased while increasing the rotational speed of the second propeller so as to mitigate increase in lift due to increase in forward flight speed of the fuselage 100.

That is, the first lift control mode may correspond to an operation mode used when the fuselage 100 performs accelerated forward flight at a constant altitude to increase an output power of the thrust unit 400 while decreasing an output power of the lift unit 300.

To elaborate, when the fuselage 100 performs accelerated forward flight at a constant altitude, the overall lift of the aircraft is increased due to the streamlined fuselage 100, the fixed wing 200, and the duct 320 having airfoil characteristics, causing the fuselage 100 to naturally ascend while flying forward. Accordingly, in order for the fuselage 100 to perform accelerated forward flight at a constant altitude, it is necessary to gradually decrease the rotational speed of the first propeller 310 while gradually increasing the rotational speed of the second propeller so as to gradually reduce the overall lift of the aircraft during accelerated forward flight. Thus, according to the present invention, it is possible to ensure that the fuselage 100 performs accelerated forward flight at a constant altitude with the output power of the lift unit 300 reduced.

In addition, the decelerated forward flight phase may have a second lift control mode in which the rotational speeds of the plurality of first propellers 310 are gradually increased while gradually decreasing the rotational speed of the second propeller so as to compensate for reduction in lift due to decrease in forward flight speed of the fuselage 100.

That is, the second lift control mode may correspond to an operation mode used when the fuselage 100 performs decelerated forward flight at a constant altitude to reduce the output power of the thrust unit 400 while increasing the output power of the lift unit 300.

□To elaborate, when the fuselage 100 performs decelerated forward flight at a constant altitude, the overall lift of the aircraft gradually decreases despite the aircraft having the streamlined fuselage 100, the fixed wing 200, and the duct 320 having airfoil characteristics, causing the fuselage 100 to naturally descend while flying forward. Accordingly, in order for the fuselage 100 to perform decelerated forward flight at a constant altitude, it is necessary to gradually increase the rotational speeds of the plurality of first propellers 310 while gradually decreasing the rotational speed of the second propeller so as to gradually increase the overall lift of the aircraft during decelerated forward flight.

The constant-speed forward flight phase may have a third lift control mode in which the plurality of first propellers 310 is rotated at a predetermined reference rotational speed.

That is, the third lift control mode may correspond to an operation mode used when the fuselage 100 performs constant-speed forward flight at a constant altitude to maintain the output power of the thrust unit 400 at a constant level while maintaining the output power of the lift unit 300 at a constant level.

Here, the reference rotational speed may be set within the range of 1% to 20% of a rotational speed of the first propeller 310 required for the hovering flight phase.

In other words, the reference rotational speed may be set within the range of 1% to 20% of the rotational speed of the first propeller 310 required for the hovering flight phase, depending on the forward speed of the aircraft, that is, the rotational speed of the second propeller. That is, since lift of the duct 300 having airfoil characteristics is increased with increasing the rotational speed of the second propeller, the reference rotational speed of the first propeller 310 may be set relatively low.

Here, even if the first propeller 310 remains stationary during high-speed forward flight of the aircraft, this may not be a significant problem in terms of flight efficiency since the first propeller 310 is protected by the duct 320 having airfoil characteristics. However, in order to quickly respond to changes in altitude and position during forward flight, it is preferable that the first propeller 310 maintain an appropriate reference rotational speed as described above.

Some of these phases may be skipped, performed in parallel, or performed in any order.

Next, a control apparatus for a vertical take-off and landing aircraft according to one embodiment of the present invention will be described.

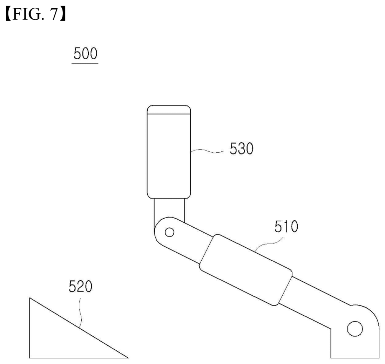

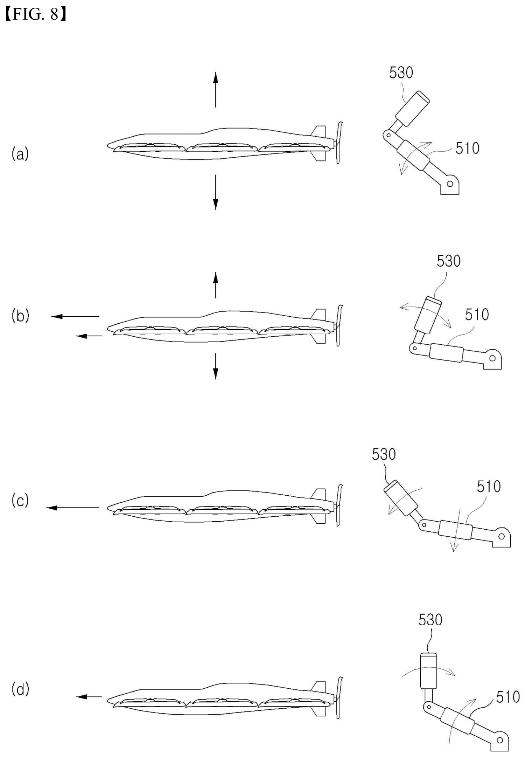

FIG. 7 is an exemplary view of a control apparatus for a vertical take-off and landing aircraft according to one embodiment of the present invention, and FIG. 8 is an exemplary view illustrating operation of the control apparatus of FIG. 7.

The control apparatus for a vertical take-off and landing aircraft according to the present invention may be used to implement the vertical take-off and landing aircraft and the maneuvering method thereof described above.

The control apparatus for a vertical take-off and landing aircraft according to the present invention may include: a vertical control unit 510, a position change control unit 520, and a forward control unit 530.

The vertical control unit 510 may collectively control the rotational speeds of the plurality of first propellers 310.

That is, as shown in FIG. 8(a), when the vertical control unit 510 is pushed forward to decrease the rotational speeds of all the plurality of first propellers 310, the altitude of the fuselage 100 can be lowered and, when the vertical control unit 510 is pulled backward to increase the rotational speeds of all the plurality of first propellers 310, the altitude of the fuselage 100 can be raised. In addition, when the vertical control unit 510 is maintained at a predetermined position to keep the rotational speeds of the plurality of first propellers 310 constant, the fuselage 100 can perform hovering flight.

The position change control unit 520 may selectively control the rotational speeds of the plurality of first propellers 310.

That is, referring to FIG. 6, the position of the fuselage 100 in the roll direction may be changed by rotating the left first propellers 310b, 310c, 310d and the right first propellers 310a, 310f, 310e at different speeds using the position change control unit 520. In addition, the position of the fuselage 100 in a pitch direction may be changed by rotating the front first propellers 310a, 310b and the rear first propellers 310d, 310e at different speeds using the position change control unit 520. In addition, the position of the fuselage 100 in the yaw direction can be changed by rotating the clockwise-rotating first propellers 310b, 310d, 310f and the counterclockwise-rotating first propellers 310a, 310c, 310e at different speeds using the position change control unit 520.

The forward control unit 530 may control the rotational speed of the second propeller.

That is, as shown in FIG. 8(b), when the forward control unit 530 is pushed forward to increase the rotational speed of the second propeller, the fuselage 100 can perform accelerated forward flight and, when the forward control unit 530 is pulled backward to decrease the rotational speed of the second propeller, the fuselage 100 can perform decelerated forward flight. In addition, when the forward control unit 530 is maintained at a predetermined position to keep the rotational speed of the second propeller constant, the fuselage 100 can perform constant-speed forward flight.

Here, when the forward control unit 530 is pushed forward to increase the rotational speed of the second propeller to cause the fuselage 100 to perform accelerated forward flight, lift of the aircraft is gradually increased due to the streamlined fuselage 100, the fixed wing 200, and the duct 320 having airfoil characteristics, whereby the fuselage 100 can naturally ascend while flying forward.

In addition, when the forward control unit 530 is pulled backward to decrease the rotational speed of the second propeller to cause the fuselage 100 to perform decelerated forward flight, the aircraft gradually loses lift despite having the streamlined fuselage 100, the fixed wing 200, and the duct 320 having airfoil characteristics, whereby the fuselage 100 can naturally descend while flying forward.

In addition, the forward control unit 530 according to the present invention may have a first lift control mode in which an operation of decelerating the plurality of first propellers 310 is linked to an operation of accelerating the second propeller to cause the fuselage 100 to perform accelerated forward flight at a constant altitude.

As shown in FIG. 8(c), in the first lift control mode, operation of the vertical control unit 510 is linked to operation of the forward control unit 530 aimed at allowing the fuselage 100 to perform accelerated forward flight at a constant altitude. In the first lift control mode, the forward control unit 530 and the vertical control unit 510 operatively linked to each other may be synchronized mechanically or electrically, wherein respective operating ranges thereof may be set individually.

That is, when the forward control unit 530 is pushed, the vertical control unit 510 operatively linked thereto is also pushed forward. Accordingly, the rotational speed of the second propeller is increased while the rotational speed of the first propeller 310 is decreased. As a result, the fuselage 100 can perform accelerated forward flight at a constant altitude.

In addition, the forward control unit 530 according to the present invention may have a second lift control mode in which an operation of accelerating the plurality of first propellers 310 is linked to an operation of decelerating the second propeller to cause the fuselage 100 to perform decelerated forward flight at a constant altitude.

As shown in FIG. 8(d), in the second lift control mode, operation of the vertical control unit 510 is linked to operation of the forward control unit 530 aimed at allowing the fuselage 100 to perform decelerated forward flight at a constant altitude. In the second lift control mode, the forward control unit 530 and the vertical control unit 510 operatively linked to each other may be synchronized mechanically or electrically, wherein respective operating ranges thereof may be set individually.

That is, when the forward control unit 530 is pulled, the vertical control unit 510 operatively linked thereto is also pulled backward. Accordingly, the rotational speed of the second propeller is decreased while the rotational speed of the first propeller 310 is increased. As a result, the fuselage 100 can perform decelerated forward flight at a constant altitude.

In addition, the forward control unit 530 according to the present invention may have a third lift control mode in which an operation of keeping the rotational speeds of the plurality of first propellers 310 constant is linked to an operation of keeping the rotational speed of the second propeller constant to cause the fuselage 100 to perform constant-speed forward flight at a constant altitude.

In the third lift control mode, the forward control unit 530 and the vertical control unit 510 are maintained at respective predetermined positions to cause the fuselage 100 to perform constant-speed forward flight at a constant altitude. Accordingly, the rotational speeds of the first propeller 310 and the second propeller are kept constant, whereby the fuselage 100 can perform constant-speed forward flight at a constant altitude.

In the third lift control mode, the rotational speed of the first propeller 310 may be maintained at a predetermined reference rotational speed, wherein the reference rotational speed may be set within the range of 1% to 20% of a rotational speed of the first propeller 310 required for the hovering flight phase.

As such, as the first propeller 310 maintains the predetermined reference rotational speed, rather than being stationary, it is possible to change the altitude or position of the fuselage 100 in a quick and stable manner using the position change control unit 520 during forward flight.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit and scope of the invention. For example, components described as implemented separately may also be implemented in combined form, or vice versa.

The scope of the present invention is indicated by the following claims and all changes or modifications derived from the meaning and scope of the claims and equivalents thereto should be construed as being within the scope of the present invention.

### [Industrial Applicability]

Due to high performance in terms of high-speed flight and stable flight, along with excellent maneuverability and efficiency, the aircraft according to the present invention can be widely used in civilian, military, and industrial applications, such as transport, security, search, surveillance, and sports, in which unmanned and manned aircraft have been evolving into a mutually integrated operational model rather than the concepts thereof being completely separated.

## Claims

1. A vertical take-off and landing aircraft comprising:
a fuselage extending lengthwise in a front-to-rear direction;
a lift unit comprising a first propeller disposed at a periphery of the fuselage to provide lift to the fuselage and a duct protecting the first propeller; and
a thrust unit comprising a second propeller disposed at a rear end of the fuselage to provide thrust to the fuselage,
wherein the duct comprises:
a propeller guard portion convexly formed toward the first propeller to have a central diameter smaller than a diameter of an inlet for air to flow in therethrough and a diameter of an outlet for air to flow out therethrough;
a leading airfoil portion disposed in a front region of the duct colliding with air during forward flight, the leading airfoil portion having a shape corresponding to a shape of a front portion of an airfoil comprising a leading edge;
a trailing airfoil portion disposed in a rear region of the duct allowing air to flow thereover during forward flight, the trailing airfoil portion having a shape corresponding to a shape of a rear portion of the airfoil comprising a trailing edge; and
a flow guide portion protruding from the propeller guard portion toward the first propeller and suppressing vortex generation at a tip of the first propeller upon rotation of the first propeller.

2. The vertical take-off and landing aircraft according to claim 1, wherein the flow guide portion covers an upper side of the tip and defines a compressed air flow path between the flow guide portion and the tip to limit a maximum rise height of the tip upon rotation of the first propeller.

3. The vertical take-off and landing aircraft according to claim 2, wherein the flow guide portion comprises:
a horizontal guide surface extending horizontally toward a rotation axis of the first propeller while being spaced apart from the upper side of the tip to define the compressed air flow path; and
a sloped guide surface extending tangentially from an inner end of the horizontal guide surface toward the inlet of the propeller guard portion.

4. The vertical take-off and landing aircraft according to claim 1, wherein the lift unit comprises a plurality of lift units symmetrically arranged with respect to the fuselage in the front-to-rear direction and in a side-to-side direction, and rotation axes of a plurality of first propellers constituting the plurality of lift units are arranged at equidistant intervals on a circumference of an imaginary circle having a constant radius about a center of gravity of the fuselage.

5. The vertical take-off and landing aircraft according to claim 4, wherein the plurality of lift units is arranged in one horizontal plane intersecting a longitudinal axis of the fuselage.

6. The vertical take-off and landing aircraft according to claim 1, further comprising:
a fixed wing connecting the fuselage to the lift unit.

7. A maneuvering method of the vertical take-off and landing aircraft according to claim 1, comprising:
a vertical flight phase in which an altitude of the fuselage is raised or lowered by collectively changing rotational speeds of the plurality of first propellers;
a hovering flight phase in which the fuselage performs hovering flight by keeping the rotational speeds of the plurality of first propellers constant;
a position change phase in which a position of the fuselage is changed by selectively changing the rotational speeds of the plurality of first propellers; and
a forward flight phase in which the fuselage performs forward flight by rotating the second propeller,
wherein the forward flight phase comprises: an accelerated forward flight phase in which the fuselage performs accelerated forward flight at a constant altitude by increasing a rotational speed of the second propeller, and
the accelerated forward flight phase has a first lift control mode in which the rotational speeds of the plurality of first propellers are collectively decreased while increasing the rotational speed of the second propeller to mitigate increase in lift due to increase in forward flight speed of the fuselage.

8. The maneuvering method according to claim 7, wherein the forward flight phase further comprises: a decelerated forward flight phase in which the fuselage performs decelerated forward flight at a constant altitude by decreasing the rotational speed of the second propeller, and the decelerated forward flight phase has a second lift control mode in which the rotational speeds of the plurality of first propellers are collectively increased while decreasing the rotational speed of the second propeller to compensate for reduction in lift due to decrease in forward flight speed of the fuselage.

9. The maneuvering method according to claim 7, wherein the forward flight phase further comprises: a constant-speed forward flight phase in which the fuselage performs constant-speed forward flight at a constant altitude by keeping the rotational speed of the second propeller constant, and the constant-speed forward flight phase has a third lift control mode in which the plurality of first propellers is rotated at a predetermined reference rotational speed.

10. The maneuvering method according to claim 9, wherein the reference rotational speed is set within the range of 1% to 20% of a rotational speed of the first propeller required for the hovering flight phase.

11. A control apparatus for the vertical take-off and landing aircraft according to claim 1, comprising:
a vertical control unit configured to collectively control rotational speeds of the plurality of first propellers;
a position change control unit configured to selectively control the rotational speeds of the plurality of first propellers; and
a forward control unit configured to control a rotational speed of the second propeller,
wherein the forward control unit has a first lift control mode in which an operation performed by the vertical control unit to decelerate the plurality of first propellers is linked to an operation of accelerating the second propeller to cause the fuselage to perform accelerated forward flight at a constant altitude.

12. The control apparatus of claim 11, wherein the forward control unit has a second lift control mode in which an operation performed by the vertical control unit to accelerate the plurality of first propellers is linked to an operation of decelerating the second propeller to cause the fuselage to perform decelerated forward flight at a constant altitude.

13. The control apparatus according to claim 11, wherein the forward control unit has a third lift control mode in which an operation performed by the vertical control unit to keep the rotational speeds of the plurality of first propellers constant is linked to an operation of keeping the rotational speed of the second propeller constant to cause the fuselage to perform constant-speed forward flight at a constant altitude.
